(19) Europäisches Patentamt
European Patent Office
Office européen des brevets

(11) EP 2 057 172 B1

(12) EUROPÄISCHE PATENTSCHRIFT

(45) Veröffentlichungstag und Bekanntmachung des Hinweises auf die Patenterteilung:
**11.09.2013 Patentblatt 2013/37**

(21) Anmeldenummer: **07730050.7**

(22) Anmeldetag: **11.06.2007**

(51) Int Cl.:
***C07F 7/18*** *(2006.01)*

(86) Internationale Anmeldenummer:
**PCT/EP2007/055708**

(87) Internationale Veröffentlichungsnummer:
**WO 2008/025580 (06.03.2008 Gazette 2008/10)**

# (54) VERFAHREN ZUR HERSTELLUNG VON ORGANOSILANEN

METHOD FOR PRODUCING ORGANOSILANES

PROCÉDÉ DE PRODUCTION D'ORGANOSILANES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.09.2006 DE 102006041356**

(43) Veröffentlichungstag der Anmeldung:
**13.05.2009 Patentblatt 2009/20**

(73) Patentinhaber: **Evonik Degussa GmbH**
**45128 Essen (DE)**

(72) Erfinder:
- **KORTH, Karsten**
  **79639 Grenzach-Wyhlen (DE)**
- **ALBERT, Philipp**
  **79539 Lörrach (DE)**
- **WITZSCHE, Susann**
  **79618 Rheinfelden (DE)**
- **KIEFER, Ingo**
  **79739 Schwörstadt-Dossenbach (DE)**
- **KIEFER, Jörg**
  **79650 Schopfheim (DE)**
- **LOTTER, Stefan**
  **50259 Pulheim (DE)**
- **MONKIEWICZ, Jaroslaw**
  **79618 Rheinfelden (DE)**
- **SCHMIDT, Jörg**
  **45770 Marl (DE)**

(56) Entgegenhaltungen:
**EP-A2- 1 130 023** **EP-A2- 1 172 367**
**WO-A-03/002573** **WO-A-03/002577**

EP 2 057 172 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung von Organosilanen.

Aus EP 1130023 ist die Herstellung von Organosilylalkylpolysulfanen der allgemeinen Formel

$$(R^1R^2R^3Si- R^4- )_2S_q$$

aus dem Organosilylalkylhalogenid bekannt. Die Umsetzung wird durchgeführt, in dem in einem polaren organischen Lösungsmittel elementarer Schwefel und das Organylalkylhalogenid vorgelegt und zu dieser Suspension wasserfreies bzw. nahezu wasserfreies ionisches Sulfid gegeben wird. Wegen der Hydrolyseanfälligkeit der Si- Alkoxy- Bindungen des Organosilylalkylhalogenids müssen die ionischen Sulfide wasserfrei bzw. nahezu wasserfrei sein.

Ferner ist aus W02003002577 A1 bekannt, Organosilylalkylpolysulfane in Gegenwart von Alkalihydroxiden zu synthetisieren und thermisch zu behandeln (W02004043969). Bei diesen bekannten Verfahren können größere Mengen NaOH in der Reaktionsmischung eingesetzt und mit den darin befindlichen Alkoxysilanen in Kontakt gebracht werden.

Aus DE 10 2005 052 233.5 ist bekannt, schwefelhaltige Alkoxysilane unter Verwendung von wasserhaltigen Schwefelungsreagentien in Alkohol zu synthetisieren. Bei der Verwendung von unterschiedlichen, kommerziell verfügbaren Rohstoffen werden bei Versuchen im Produktionsmaßstab große Unterschiede im Monomergehalt der erhaltenen polysulfidischen Alkoxysilane festgestellt. Eine verlässliche, gleichmäßige Produktqualität im industriellen Maßstab lässt sich so nicht erzielen.

Nachteile der bekannten Verfahren sind der Einsatz von wasserfreien bzw. nahezu wasserfreien Ausgangsstoffen und bei wasserhaltigen Ausgangsstoffen die starken Schwankungen in der Produktqualität, insbesondere dem Monomergehalt.

Aufgabe der vorliegenden Erfindung ist es, ein Verfahren zur Herstellung von schwefelhaltigen Organosilanen zur Verfügung zu stellen, welches gute Rohproduktausbeuten mit >90% der Theorie und hohe Monomergehalte mit >90 Gew.-% bei gleichzeitiger Verwendung von wasserhaltigen Schwefelungsreagenzien ermöglicht.

Gegenstand der Erfindung ist ein Verfahren zur Herstellung von Organosilanen der allgemeinen Formel I,

$$[R\ (R)\ (R'O)\ Si- R''- ]_2S_m \qquad I$$

wobei

R gleich oder verschieden und eine $C_1$- $C_8$- Alkyl-, vorzugsweise $CH_3$ oder $CH_2CH_3$, $C_1$- $C_8$- Alkenyl-, $C_1$- $C_8$- Aryl-, $C_1$- $C_8$- Aralkylgruppe oder eine OR' Gruppe ist, R' gleich oder verschieden und eine $C_1$- $C_{22}$-, vorzugsweise $C_1$- $C_4$- oder $C_{12}$- $C_{18}$-, besonders bevorzugt $CH_2CH_3$, verzweigte oder unverzweigte einbindige Alkyl- oder Alkenyl- Gruppe, eine Arylgruppe, eine Aralkylgruppe, ein Wasserstoff (- H) ,

eine Alkylethergruppe O- $(CR^{III}_2)$- O- Alk oder O- $(CR^{III}_2)_y$- O- Alk oder eine Alkylpolyethergruppe O- $(CR^{III}_2O)_y$- Alk oder O- $(CR^{III}_2$- $CR^{III}_2$- $O)_y$- Alk, mit y = 2- 20, bevorzugt 2- 10, besonders bevorzugt 3- 8, außerordentlich bevorzugt 3- 6, $R^{III}$ unabhängig voneinander H oder eine Alkylgruppe, vorzugsweise $CH_3$- Gruppe, ist und

Alk eine verzweigte oder unverzweigte, gesättigte oder ungesättigte, aliphatische, aromatische oder gemischt aliphatische /aromatische einbindige $C_1$- $C_{22}$-, bevorzugt $C_2$- $C_{20}$-, besonders bevorzugt $C_6$- $C_{18}$-, ganz besonders bevorzugt $C_{10}$- $C_{18}$-, Kohlenwasserstoffgruppe ist, ist, R'' eine verzweigte oder unverzweigte, gesättigte oder ungesättigte, aliphatische, aromatische oder gemischt aliphatische /aromatische zweibindige $C_1$- $C_{30}$-, bevorzugt $C_1$- $C_{20}$-, besonders bevorzugt $C_1$- $C_{10}$-, ganz besonders bevorzugt $C_1$- $C_7$-, Kohlenwasserstoffgruppe, die gegebenenfalls mit F-, Cl-, Br-, I-, HS-, $NH_2$-, oder NHR' substituiert ist, ist,

und m eine mittlere Schwefelkettenlänge von 1, 5 bis 4, 5 ist,

durch Umsetzung von (Halogenorganyl) alkoxysilan der Formel II,

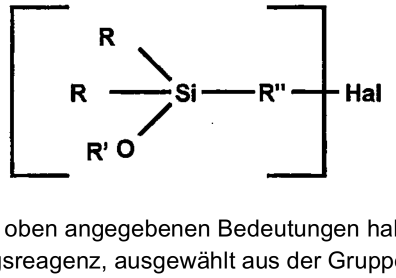

II

wobei R, R' und R'' die oben angegebenen Bedeutungen haben und Hal Chlor, Brom, Fluor oder Iod ist,

mit einem Schwefelungsreagenz, ausgewählt aus der Gruppe Alkalihydrogensulfid, Metallsulfid $Me_2S$, Metallpolysulfid $Me_2Sg$ und beliebige Kombinationen hiervon, mit Me= Alkalimetall, $NH_4$ oder $(Erdalkalimetall)_{1/2}$, und g=1, 5- 8, 0, und gegebenenfalls zusätzlich mit Schwefel und/ oder mit $H_2S$ in einem Lösungsmittel, wobei das Lösungsmittel ein Alkohol oder eine Mischung von Alkoholen ist,

welches dadurch gekennzeichnet ist, dass der Alkalihydroxidgehalt aller Einsatzstoffe < 0, 44 Gew.- %, vorzugsweise < 0, 35 Gew.- %, besonders bevorzugt < 0, 1 Gew.- %, ganz besonders bevorzugt kleiner 0, 05 Gew.- %, ist und ein Additiv vor, während oder nach der Reaktion zugegeben wird, welches in der Lage ist, im pH Bereich zwischen 5 und 8 ein Proton reversibel oder irreversibel an Alkalihydrogensulfid oder Alkalisulfid abzugeben..

Der Alkalihydroxidgehalt aller Einsatzstoffe ist die Summe der Alkalihydroxidgehalte aller Stoffe die vor, während oder zum Ende der Umsetzung zugegeben werden, wobei der Alkalihydroxidgehalt der (Halogenorganyl)alkoxysilane der allgemeinen Formel II und des Lösungsmittels unberücksichtigt bleiben.

Der Alkalihydroxidgehalt aller Einsatzstoffe kann 0 Gew.-% betragen.

Die Alkalihydroxide können LiOH, NaOH und KOH sein.

Der Alkalihydroxidgehalt aller Einsatzstoffe kann 0,0001 - 0,44 Gew.-%, vorzugsweise 0,0001 - 0,25 Gew.-%, besonders bevorzugt 0,0001 - 0,1 Gew.-%, ganz besonders bevorzugt 0,001 - 0,015 Gew.-%, betragen.

Der Lithiumhydroxidgehalt aller Einsatzstoffe kann 0,0001 - 0,44 Gew.-%, vorzugsweise 0,0001 - 0,25 Gew.-%, besonders bevorzugt 0,0001 - 0,1 Gew.-%, ganz besonders bevorzugt 0,001 - 0,015 Gew.-%, betragen.

Der Natriumhydroxidgehalt aller Einsatzstoffe kann 0,0001 - 0,44 Gew.-%, vorzugsweise 0,0001 - 0,25 Gew.-%, besonders bevorzugt 0,0001 - 0,1 Gew.-%, ganz besonders bevorzugt 0,001 - 0,015 Gew.-%, betragen.

Der Kaliumhydroxidgehalt aller Einsatzstoffe kann 0,0001 - 0,45 Gew.-%, vorzugsweise 0,0001 - 0,25 Gew.-%, besonders bevorzugt 0,0001 - 0,1 Gew.-%, ganz besonders bevorzugt 0,001 - 0,015 Gew.-%, betragen.

R" kann- $CH_2$-, -$CH_2CH_2$-, -$CH_2CH_2CH_2$-, -$CH_2CH_2CH_2CH_2$-, CH ($CH_3$)-, -$CH_2$CH ($CH_3$)-, -CH ($CH_3$) $CH_2$-, -C ($CH_3$)$_2$-, CH ($C_2H_5$)-, -$CH_2CH_2$CH ($CH_3$)-, -$CH_2$CH ($CH_3$) $CH_2$- oder

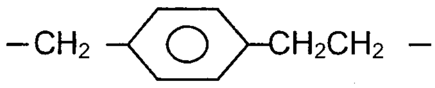

bedeuten.

Es können bei dem erfindungsgemäßen Verfahren zur Herstellung von Organosilanen Verbindungen der allgemeinen Formel I oder auch Mischungen aus Verbindungen der allgemeinen Formel I entstehen.

Die Gemische aus Organosilanen der allgemeinen Formel I können eine mit HPLC + GC bestimmbare mittlere Schwefelkettenlänge von m=1,5-4,5 besitzen, wobei die einzelnen Organosilane Schwefelketten mit S1 bis S12 aufweisen können.

Die mittlere Schwefelkettenlänge m, bestimmt durch GC und HPLC oder NMR, kann 1,5 bis 4,5, bevorzugt 2 bis 2,8 oder 3,0 bis 4, besonders bevorzugt 2 bis 2,5 oder 3, 4 bis 3, 8, sein.

Verbindungen der allgemeinen Formel I die Gemische mit einer mittleren Schwefelkettenlänge von m=1, 5- 4, 5 bilden, sind beispielsweise in DE 10 2005 052 233.5 beschrieben und können vorzugsweise
[ $(MeO)_3$Si $(CH_2)_3]_2$S, [$(MeO)_3$Si $(CH_2)_3]_2S_2$,
[ $(MeO)_3$Si $(CH_2)_3]_2S_3$, [$(MeO)_3$Si $(CH_2)_3]_2S_4$,
[ $(MeO)_3$Si $(CH_2)_3]_2S_5$, [$(MeO)_3$Si $(CH_2)_3]_2S_6$,
[ $(MeO)_3$Si $(CH_2)_3]_2S_7$, [$(MeO)_3$Si $(CH_2)_3]_2S_8$,
[ $(MeO)_3$Si $(CH_2)_3]_2S_9$, [$(MeO)_3$Si $(CH_2)_3]_2S_{10}$,
[ $(EtO)_3$Si $(CH_2)_3]_2$S, [$(EtO)_3$Si $(CH_2)_3]_2S_2$,
[ $(EtO)_3$Si $(CH_2)_3]_2S_3$, [$(EtO)_3$Si $(CH_2)_3]_2S_4$,
[ $(EtO)_3$Si $(CH_2)_3]_2S_5$, [$(EtO)_3$Si $(CH_2)_3]_2S_6$,
[ $(EtO)_3$Si $(CH_2)_3]_2S_7$, [$(EtO)_3$Si $(CH_2)_3]_2S_8$,
[ $(EtO)_3$Si $(CH_2)_3]_2S_9$, [$(EtO)_3$Si $(CH_2)_3]_2S_{10}$,
[ $(C_3H_7O)_3$Si $(CH_2)_3]_2$S, [$(C_3H_7O)_3$Si $(CH_2)_3]_2S_2$,
[ $(C_3H_7O)_3$Si $(CH_2)_3]_2S_3$, [$(C_3H_7O)_3$Si $(CH_2)_3]_2S_4$,
[ $(C_3H_7O)_3$Si $(CH_2)_3]_2S_5$, [$(C_3H_7O)_3$Si $(CH_2)_3]_2S_6$,
[ $(C_3H_7O)_3$Si $(CH_2)_3]_2S_7$, [$(C_3H_7O)_3$Si $(CH_2)_3]_2S_8$,
[ $(C_3H_7O)_3$Si $(CH_2)_3]_2S_9$ oder [$(C_3H_7O)_3$Si $(CH_2)_3]_2S_{10}$ sein.

Die Alkylpolyethergruppe in Formel I und II kann Ethylenoxid- ($CH_2$- $CH_2$- O) und Propylenoxid- Einheiten, beispielsweise (CH (CH3)- $CH_2$- O) oder ($CH_2$- CH ($CH_3$)- O) , enthalten.

Die Alkylpolyethergruppe O- $(CR^{III}{}_2O)_y$- Alk oder O- ($CR^{III}{}_2$- $CR^{III}{}_2O)_y$- Alk kann denen in DE 10 2005 052 233.5 beschriebenen Alkylpolyethergruppen entsprechen.

Vorzugsweise können als (Halogenorganyl)alkoxysilane der Formel II die in DE 10 2005 052 233.5 beschriebenen (Halogenorganyl)alkoxysilane verwendet werden.

Vorzugsweise können als (Halogenorganyl) alkoxysilane der Formel II
3- Chlorbutyl (triethoxysilan) ,
3- Chlorbutyl (trimethoxysilan) ,

3- Chlorbutyl (diethoxymethoxysilan) ,
3- Chlorisobutyl (triethoxysilan) ,
3- Chlorisobutyl (trimethoxysilan) ,
3- Chlorisobutyl (diethoxymethoxysilan) ,
3- Chlorpropyl (triethoxysilan) ,
3- Chlorpropyl (trimethoxysilan) ,
3- Chlorpropyl (diethoxymethoxysilan) ,
2- Chlorethyl (triethoxysilan) ,
2- Chlorethyl (trimethoxysilan) ,
2- Chlorethyl (diethoxymethoxysilan) ,
1- Chlormethyl (triethoxysilan) ,
1- Chlormethyl (trimethoxysilan) ,
1- Chlormethyldiethoxymethoxysilan) ,
3- Chlorbutyl (diethoxymethylsilan) ,
3- Chlorbutyl (dimethoxymethylsilan) ,
3- Chlorisobutyl (dimethoxymethylsilan) ,
3- Chlorisobutyl (diethoxymethylsilan) ,
3- Chlorpropyl (diethoxymethylsilan) ,
3- Chlorpropyl (dimethoxymethylsilan) ,
2- Chlorethyl (diethoxymethylsilan) ,
2- Chlorethyl (dimethoxymethylsilan) ,
1- Chlormethyl (diethoxymethylsilan) ,
1- Chlormethyl (dimethoxymethylsilan) ,
3- Chlorbutyl (ethoxydimethylsilan) ,
3- Chlorbutyl (methoxydimethylsilan) ,
3- Chlorisobutyl (methoxydimethylsilan) ,
3- Chlorisobutyl (ethoxydimethylsilan) ,
3- Chlorpropyl (ethoxydimethylsilan) ,
3- Chlorpropyl (methoxydimethylsilan) ,
2- Chlorethyl (ethoxydimethylsilan) ,
2- Chlorethyl (methoxydimethylsilan) ,
1- Chlormethyl (ethoxydimethylsilan) und
1- Chlormethyl (methoxydimethylsilan) eingesetzt werden.

Das (Halogenorganyl)alkoxysilan kann ein (Halogenorganyl)alkoxysilan der Formel II oder eine Mischung aus (Halogenorganyl)alkoxysilanen der Formel II sein.

Die verwendete, molare Menge des eingesetzten (Halogenorganyl)alkoxysilans kann die Summe der molaren Mengen an Schwefelungsreagenzien, z.B. $Me_2S$, MeSH oder/und $Me_2S_g$, um 0,05 Mol-% bis 50 Mol-%, bevorzugt um 0,5 bis 20 Mol-%, besonders bevorzugt um 0,5 bis 10 Mol-%, ganz besonders bevorzugt um 1 bis 6 Mol-%, übersteigen.

Der eingesetzte Schwefel kann eine durchschnittliche Partikelgröße von >100 μm, bevorzugt >200 μm, besonders bevorzugt >500 μm, ganz besonders bevorzugt >2000 μm, haben, wenn ein nahezu staubfreies Material benötigt wird.

Der eingesetzte Schwefel kann eine durchschnittliche Partikelgröße von <100 μm und >1 μm, bevorzugt von <80 μm und >1 μm, besonders bevorzugt von <65 μm und >5 μm, ganz besonders bevorzugt von <50 μm und >5 μm, haben, wenn ein Material mit einer hohen, spezifischen Oberfläche benötigt wird.

Der eingesetzte Schwefel kann eine durchschnittliche Partikelgröße von <500 μm, bevorzugt <250 μm, besonders bevorzugt <100 μm, ganz besonders bevorzugt <80 μm, haben, wenn ein Material mit einer hohen, spezifischen Oberfläche benötigt wird.

Die Bestimmung der Partikelgrößenverteilung des Schwefels erfolgt durch Laserbeugungsanalyse ohne Ultraschallbehandlung mit einem Coulter LS 100 mit Dry Powder Modul (Firma Beckman-Coulter.) gemäß den allgemein bekannten Regeln und Bedienvorschriften. Für 60 sec. wird ein kontinuierlicher Strom an originalen, unbehandelten Partikeln der zu messenden Probe in einem Luftstrahl durch einen Laserstrahl geführt. Der Partikelstrom wird durchstrahlt und die unterschiedlichen Korngrößen (Partikelgrößen) detektiert und statistisch ausgewertet. Die messbare Partikelgröße beträgt minimal 0,4 μm und maximal. 900 μm.

Der eingesetzte Schwefel kann eine durchschnittliche Partikelgröße laut Siebung von <20000 μm und >1 μm, bevorzugt von <15000 μm und >100 μm, besonders bevorzugt von <12000 μm und >500 μm, ganz besonders bevorzugt von <10000 μm und >2000 μm, haben, wenn ein staubarmes Material mit einer hohen Schüttdichte benötigt wird.

Die Partikelfraktionen des Schwefels laut Siebung werden folgendermaßen ermittelt:

Bestimmt werden die Partikelfraktionen vorgeformten, granulierten, mikrogranulierten oder mikrogeperlten Schwefels durch Siebung. Dazu wird eine bestimmte Menge Schwefelpartikel mit einem Stapel von Sieben unterschiedlicher, genormter Maschenweite aufgetrennt.

Durch Auswiegen wird der Anteil der einzelnen Fraktionen ermittelt. Die dafür verwendeten Geräte: Mech. Siebmaschine (Ro-tap); Präzisionswaage: Genauigkeit ± 0.01 g (Fa. Mettler)

Standardsiebe U.S. Standard No. 120, Höhe 25 mm, ∅: 200 mm; Maschenweiten zum Beispiel: 300 μm (50 mesh); 150 μm (100 mesh); 75 μm (200 mesh).

Die Siebe und ein Auffangbehälter werden in der vorgesehenen Reihenfolge, das heisst mit von oben nach unten abnehmender Öffnungsweite, zusammengesteckt. Man wiegt 100 g der zu untersuchenden Probe ab, wobei eine passende Schaufel verwendet wird. Eine Vorauswahl des Materials durch Ausgießen oder Umgießen der geformten Schwefelpartikel aus dem Vorratsbehälter ist zu vermeiden. Nach der Überführung der abgewogenen Schwefelpartikel auf das oberste Sieb wird ein Deckel aufgesetzt und der Stapel so in die Siebmaschine eingesetzt, daß ein Spiel von ca. 1,5 mm verbleibt und die Siebe somit frei rotieren können.

Die Siebe werden in der Maschine befestigt und dann 5 min lang - mit dem Rüttler beziehungsweise Klopfwerk in Betrieb - geschüttelt. Danach nimmt man die Siebe nacheinander auseinander und wiegt die jeweils darin befindliche Schwefelpartikelmenge auf 0,1 g genau aus. Von jeder Probe wird eine Doppelbestimmung durchgeführt. Es wird jeweils der Mittelwert der in den einzelnen Sieben und im Auffangbehälter gefundenen Schwefelpartikelmengen in % angegeben.

Das Schwefelungsreagenz und gegebenenfalls Schwefel und/oder $H_2S$ können Alkalihydrogensulfid, $Me_2S$, $Me_2S_g$, Alkalihydrogensulfid + Schwefel, $Me_2S$ + Schwefel, $Me_2S_g$ + Schwefel, Alkalihydrogensulfid + $Me_2Sg$ + $Me_2S$, $Me_2Sg$ + $Me_2S$, Alkalihydrogensulfid + $Me_2S$ + Schwefel, Alkalihydrogensulfid + $Me_2Sg$ + Schwefel, $Me_2S$ + $Me_2Sg$ + Schwefel, Alkalihydrogensulfid + $Me_2S_g$ + $Me_2S$ + Schwefel, $H_2S$ + $Me_2Sg$ + $Me_2S$ + Schwefel, $H_2S$ + Alkalihydrogensulfid + $Me_2Sg$ + $Me_2S$ + Schwefel, $H_2S$ + Alkalihydrogensulfid + $Me_2Sg$ + $Me_2S$, $H_2S$ + Alkalihydrogensulfid + $Me_2S$, $H_2S$ + Alkalihydrogensulfid $Me_2Sg$, $H_2S$ + $Me_2S$ + Schwefel, $H_2S$ + $Me_2Sg$ + Schwefel, $H_2S$ + $Me_2S_g$ + $Me_2S$, $H_2S$ + $Me_2Sg$ und $H_2S$ + $Me_2S$ sein.

Als Alkalihydrogensulfid kann Lithiumhydrogensulfid (LiSH), Natriumhydrogensulfid (NaSH), Kaliumhydrogensulfid (KSH) und Cäsiumhydrogensulfid (CsSH) eingesetzt werden.

Als Alkalisulfid $Me_2S$ oder Alkalipolysulfid $Me_2Sg$ können $Li_2S$, $Na_2S$, $K_2S$, $Na_2S_2$, $Na_2S_3$, $Na_2S_4$, $Na_2S_5$, $Na_2S_6$, $K_2S_2$, $K_2S_3$, $K_2S_4$, $K_2S_5$, $K_2S_6$ oder Mischungen hiervon eingesetzt werden.

Die eingesetzten, wasserhaltigen Schwefelungsreagenzien können als Feststoffe oder in Lösung der Reaktion zugesetzt werden.

Die festen wasserhaltigen Schwefelungsreagenzien können weniger als 60 Gew.-%, bevorzugt weniger als 50 Gew.-%, besonders bevorzugt weniger als 40 Gew.-%, ganz besonders bevorzugt weniger als 35 Gew.-%, Wasser enthalten.

Bevorzugt können die festen, wasserhaltigen Schwefelungsreagenzien der Form $Me_2Sg$ weniger als 60 Gew.-%, bevorzugt weniger als 50 Gew.-%, besonders bevorzugt weniger als 40 Gew.-%, ganz besonders bevorzugt weniger als 35 Gew.-%, Wasser enthalten.

Die wasserhaltigen Schwefelungsreagenzien können zwischen 10 und 60 Gew.-%, bevorzugt zwischen 10 und 50 Gew.-%, besonders bevorzugt zwischen 15 und 35 Gew.-%, Wasser enthalten.

Die wasserhaltigen Schwefelungsreagenzien können, neben Wasser, weitere Nebenbestandteile zu weniger als 30 Gew.-%, bevorzugt weniger als 20 Gew.-%, besonders bevorzugt weniger als 10 Gew.-%, ganz besonders bevorzugt weniger als 5 Gew.-%, enthalten.

Die festen wasserhaltigen Alkalihydrogensulfide können mehr als 50 Gew.-%, bevorzugt mehr als 60 Gew.-%, besonders bevorzugt mehr als 65 Gew.-%, ganz besonders bevorzugt mehr als 70 Gew.-%, Alkalihydrogensulfid enthalten.

Weitere Nebenbestandteile von wasserhaltigen Schwefelungsreagenzien können neben Wasser unabhängig voneinander Alkalicarbonate, Alkalihydrogencarbonate, Alkalisulfate, Alkalihydrogensulfate, Alkalithiosulfate und/oder Alkalihydrogenthiosulfate sein.

Der Wassergehalt der Schwefelungsreagenzien wird folgendermaßen bestimmt: Für die Wassergehaltsbestimmung werden Glasperlen angehaucht, mit Phosphorpentoxid belegt und anschließend in ein U-Rohr gefüllt. Ca. 3g der Probe werden in einen 50 ml Kolben eingewogen, unter mit Sicapent getrocknetem Stickstoffstrom (30ml/min) 2 Stunden lang bei 320°C ausgeheizt und anschließend noch 30 min unter Stickstoffstrom stehen gelassen. Das feuchte Trägergas wird über eine Schlauchverbindung vom Kolben in das U-Rohr geleitet. Mögliche Kondensationen zwischen Kolben und U-Rohr werden während der Ausheizphase mit Hilfe eines Föns ausgetrieben. Das U-Rohr wird zurückgewogen und die aus den Schwefelungsreagenzien freigesetzte Wassermenge gravimetrisch bestimmt.

Lösungen von Schwefelungssreagentien können mehr als 5 Gew.-%, bevorzugt mehr als 10 Gew.-%, besonders bevorzugt mehr als 15 Gew.-%, ganz beosnders bevorzugt mehr als 20 Gew.-%, Schwefelungssreagentien enthalten. Lösungen von Schwefelungsreagentien können in Wasser gelöste Schwefelungssreagentien sein.

Die für das Verfahren verwendeten Lösungsmittel können wasserhaltige Lösungsmittel sein.

Als Alkohole können primäre, sekundäre oder tertiäre Alkohole mit 1 bis 24, vorzugsweise 1 bis 6, besonders bevorzugt 1 bis 4, Kohlenstoffatomen eingesetzt werden.

Als Alkohol können Alkylether der Formel HO- $(CR^{IV}_2)$- O- Alk' oder HO- $(CR^{IV}_2)_{y'}$- O- Alk' oder Alkylpolyether der Formel HO- $(CR^{IV}_2O)_{y'}$- Alk' oder HO- $(CR^{IV}_2$- $CR^{IV}_2$- $O)_{y'}$- Alk' eingesetzt werden, mit y'=2- 20, bevorzugt 2- 10, besonders bevorzugt 3- 6, $R^{IV}$ unabhängig voneinander H oder eine Alkylgruppe, vorzugsweise $CH_3$- Gruppe, ist und Alk' eine verzweigte oder unverzweigte, gesättigte oder ungesättigte, aliphatische, aromatische oder gemischt aliphatische /aromatische einbindige $C_1$- $C_{22}$-, bevorzugt $C_2$- $C_{20}$-, besonders bevorzugt $C_6$- $C_{18}$-, ganz besonders bevorzugt $C_{10}$- $C_{18}$-, Kohlenwasserstoffgruppe ist.

Als primäre, sekundäre oder tertiäre Alkohole können Methanol, Ethanol, n- Propanol, i- Propanol, i- Butanol, n- Butanol, n- Hexanol, i- Hexanol, Cyclohexanol, Oktanol, Dodecanol, Tetradecanol, Hexadecanol oder Octadecanol eingesetzt werden. Als Alkylpolyether können HO- $(CH_2$- $CH_2$- $O)_a$- $C_bH_{2b+1}$, mit a gleich 2 bis 20, bevorzugt 2- 10, besonders bevorzugt 2- 8, ganz besonders bevorzugt 3- 6, und b = 1- 22, bevorzugt 2- 20, besonders bevorzugt 6- 18, ganz besonders bevorzugt 10- 18, eingesetzt werden.

Primäre Alkohole können sein HO- $(CH_2$- $CH_2$- $O)_2$- $C_6H_{13}$, HO- $(CH_2$- $CH_2$- $O)_3$- $C_6H_{13}$, HO- $(CH_2$- $CH_2$- $O)_4$- $C_6H_{13}$, HO- $(CH_2$- $CH_2$- $O)_5$- $C_6H_{13}$, HO- $(CH_2$- $CH_2$- $O)_6$- $C_6H_{13}$ HO- $(CH_2$- $CH_2$- $O)_7$- $C_6H_{13}$, HO- $(CH_2$- $CH_2$- $O)_8$- $C_6H_{13}$, HO- $(CH_2$- $CH_2$- $O)_9$- $C_6H_{13}$, HO- $(CH_2$- $CH_2$- $O)_2$- $C_{10}H_{21}$, HO- $(CH_2$- $CH_2$- $O)_3$- $C_{10}H_{21}$, HO- $(CH_2$- $CH_2$- $O)_4$- $C_{10}H_{21}$, HO- $(CH_2$- $CH_2$- $O)_5$- $C_{10}H_{21}$, HO- $(CH_2$- $CH_2$- $O)_6$- $C_{10}H_{21}$, HO- $(CH_2$- $CH_2$- $O)_7$- $C_{10}H_{21}$, HO- $(CH_2$- $CH_2$- $O)_8$- $C_{10}H_{21}$. HO- $(CH_2$- $CH_2$- $0)_9$- $C_{10}H_{21}$, HO- $(CH_2$- $CH_2$- $O)_2$- $C_{13}H_{27}$, HO- $(CH_2$- $CH_2$- $O)_3$- $C_{13}H_{27}$, HO- $(CH_2$- $CH_2O)_4$- $C_{13}H_{27}$, HO- $(CH_2$- $CH_2$- $O)_5$- $C_{13}H_{27}$, HO- $(CH_2$- $CH_2O)_6$- $C_{13}H_{27}$, HO- $(CH_2$- $CH_2$- $O)_7$- $C_{13}H_{27}$, HO- $(CH_2$- $CH_2$- $O)_8$- $C_{13}H_{27}$, HO- $(CH_2$- $CH_2$- $O)_9$- $C_{13}H_{27}$, HO- $(CH_2$- $CH_2$- $O)_2$- $C_{15}H_{31}$, HO- $(CH_2$- $CH_2$- $O)_3$- $C_{15}H_{31}$, HO- $(CH_2$, $-CH_2$- $O)_4$- $C_{15}H_{31}$, HO- $(CH_2$- $CH_2$- $O)_5$- $C_{15}H_{31}$, HO- $(CH_2$- $CH_2$- $O)_6$- $C_{15}H_{31}$, HO- $(CH_2$- $CH_2$- $O)_7$- $C_{15}H_{31}$, HO- $(CH_2$- $CH_2$- $O)_8$- $C_{15}H_{31}$ oder HO- $(CH_2$- $CH_2$- $O)_9$- $C_{15}H_{31}$.

Die Menge an zugesetztem Lösungsmittel kann mindestens 1 Gew.-%, bevorzugt 10 bis 800 Gew.-%, besonders bevorzugt 10 bis 150 Gew.-%, ganz besonders bevorzugt 20 bis 100 Gew.-%, außerordentlich bevorzugt 20 bis 80 Ges.-%, der eingesetzten Silankomponenten betragen.

Die Menge an zugesetztem, wasserhaltigem Lösungsmittel kann mindestens 1 Gew.-%, bevorzugt 10 bis 800 Gew.-%, besonders bevorzugt 10 bis 150 Gew.-%, ganz besonders bevorzugt 20 bis 100 Ges.-%, außerordentlich bevorzugt 20 bis 100 Gew.-%, der eingesetzten Silankomponenten betragen.

Das eingesetzte Lösungsmittel kann mehr als 7,5 Gew.-%, bevorzugt mehr als 9 Gew.-%, besonders bevorzugt mehr als 14 Gew.-%, insbesondere bevorzugt mehr als 19 Gew.-%, Wasser enthalten.

Das Lösungsmittel kann zwischen 7,5 und 75 Gew.-%, bevorzugt zwischen 7,5 und 49 Gew.-%, besonders bevorzugt zwischen 7,5 und 30 Gew.-%, insbesondere bevorzugt zwischen 9 und 29 Gew.-%, ganz besonders bevorzugt zwischen 14 und 24 Gew.-%, Wasser enthalten.

Vor, während oder nach der Reaktion können Additive zugesetzt werden.

Additive können die in der DE 10 2005 052 233.5 benannten Additive, unter Ausschluss von Alkalihydroxiden sein.

Additive können nichtalkoholische Lösungsmittel sein.

Zu der Reaktionsmischung können vor, während oder nach der Reaktion Additive, ausgewählt aus der Gruppe $H_2S$, $CO_2$, oder eine Verbindung, die in der Lage ist, im pH-Bereich zwischen 5 und 8 ein Proton reversibel oder irreversibel an Alkalihydrogensulfide abzugeben, gegeben werden.

Zu der Reaktionsmischung können vor, während oder nach der Reaktion Additive, ausgewählt aus der Gruppe $H_2S$, $CO_2$ oder eine Verbindung, die in der Lage ist, im pH-Bereich zwischen 5 und 8 ein Proton reversibel oder irreversibel an Alkalisulfide abzugeben, gegeben werden.

Verbindungen, die in der Lage sind, im pH- Bereich zwischen 5 und 8 ein Proton reversibel oder irreversibel an Alkalihydrogensulfide oder Alkalisulfide abzugeben, können beispielsweise organische oder anorganische Säuren sein.

Organische Säuren und anorganische Säuren sind beispielsweise in DE 10 2005 052 233.5 beschrieben. Organische Säuren können Verbindungen der folgenden Grundstrukturen sein: Alkyl- COOH, Aryl- COOH, Aralkyl- COOH, Alkyl- S $(O)_2OH$, HOOC- Alkylen- COOH, HOOC- Aryl- COOH oder HOOC- Aralkyl- COOH.

Anorganische Säuren können zum Beispiel Verbindungen der Zusammensetzung HCl, $H_2SO_4$, $H_3PO_4$, (Alkaliion) $H_2PO_4$, $(Alkaliion)_2HPO_4$, $H_2CO_3$, (Alkaliion) $HCO_3$, oder (Alkaliion) $HSO_4$ sein.

Zu Beginn der Umsetzung und/oder während der Umsetzung und/oder zum Ende der Umsetzung können polare, protische, aprotische, basische oder saure Additive zur Reaktionsmischung zugegeben werden.

Saure oder basische Additive, die der Reaktionsmischung vor, während oder zum Ende des Verfahrens zugesetzt werden, können die Struktur (Alkaliion) $H_2PO_4$, $(Alkaliion)_2HPO_4$, $(Alkaliion)_3PO_4$ (Alkaliion) $HCO_3$, $(Alkaliion)_2CO_3$, $(Alkaliion)_2SO_4$ oder (Alkaliion) $HSO_4$ haben. Verbindungen der Struktur (Alkaliion) $H_2PO_4$ können bevorzugt $KH_2PO_4$ und $NaH_2PO_4$ sein. Verbindungen der Struktur $(Alkaliion)_2HPO_4$ können bevorzugt $K_2HPO_4$ und $Na_2HPO_4$ sein. Ver-

bindungen der Struktur (Alkaliion) $HCO_3$ können bevorzugt $KHCO_3$ und $NaHCO_3$ sein. Verbindungen der Struktur (Alkaliion)$_2CO_3$ können bevorzugt $K_2CO_3$, $Li_2CO_3$ und $Na_2CO_3$ sein. Verbindungen der Struktur (Alkaliion) $HSO_4$ können bevorzugt $KHSO_4$ und $NaHSO_4$ sein.

Saure oder basische Additive, die der Reaktionsmischung vor, während oder zum Ende des Verfahrens zugesetzt werden, können eine durchschnittliche Partikelgröße von >100 µm, bevorzugt >200 µm, besonders bevorzugt >500 µm, ganz besonders bevorzugt >2000 µm, haben, wenn ein nahezu staubfreies Material benötigt wird.

Saure oder basische Additive, die der Reaktionsmischung vor, während oder zum Ende des Verfahrens zugesetzt werden, können eine durchschnittliche Partikelgröße von <100 µm und >1 µm, bevorzugt von <80 µm und >1 µm, besonders bevorzugt von <65 µm und >5 µm, ganz besonders bevorzugt von <50 µm und >5 µm, haben, wenn ein Material mit einer hohen, spezifischen Oberfläche benötigt wird.

Saure oder basische Additive, die der Reaktionsmischung vor, während oder zum Ende des Verfahrens zugesetzt werden, können eine durchschnittliche Partikelgröße von <500 µm, bevorzugt <250 µm, besonders bevorzugt <100 µm, ganz besonders bevorzugt <80 µm, haben, wenn ein Material mit einer hohen, spezifischen Oberfläche benötigt wird.

Die Bestimmung der Partikelgrößenverteilung der Proben der festen saure oder basische Additive erfolgt durch Laserbeugungsanalyse ohne Ultraschallbehandlung mit einem Coulter LS 100 mit Dry Powder Modul (Firma Beckman-Coulter) gemäß den allgemein bekannten Regeln und Bedienvorschriften. Für 60 sec. wird ein kontinuierlicher Strom an originalen, unbehandelten Partikeln der zu messenden Probe in einem Luftstrahl durch einen Laserstrahl geführt. Der Partikelstrom wird durchstrahlt und die unterschiedlichen Korngrößen (Partikelgrößen) detektiert und statistisch ausgewertet. Die messbare Partikelgröße beträgt minimal 0,4 µm und maximal 900 µm.

Das (Halogenorganyl) alkoxysilan, Additive, Schwefelungsreagenz und Lösungsmittel können miteinander in verschiedener dem Fachmann vertrauter Reihenfolge, Weise, Temperatur und Zeitdauer vermischt werden.

Mögliche Mischreihenfolgen sind in DE 10 2005 052 233.5 beschrieben.

Die für die Reaktion benötigten Schwefelungsreagenzien können vor oder während der Reaktion aus schwefelhaltigen Verbindungen gebildet werden.

Die schwefelhaltigen Verbindungen können unter den Reaktionsbedingungen durch Protonierung vollständig oder unvollständig, reversibel oder irreversibel zu Alkalihydrogensulfiden oder $H_2S$ reagieren.

Die schwefelhaltigen Verbindungen können unter den Reaktionsbedingungen durch Deprotonierung vollständig oder unvollständig, reversibel oder irreversibel zu Alkalisulfiden oder Alkalihydrogensulfiden reagieren.

Die Protonierung der Schwefelverbindungen aus denen vor oder während der Reaktion Alkalihydrogensulfide gebildet werden, kann durch $H_2S$ und / oder organische und / oder anorganische Säuren erfolgen.

Die Deprotonierung der Schwefelverbindungen aus denen vor oder während der Reaktion Alkalisulfide gebildet werden können, kann durch organische und / oder anorganische Basen erfolgen.

Die Deprotonierung von $H_2S$, wodurch vor oder während der Reaktion Alkalihydrogensulfide gebildet werden können, kann durch organische und / oder anorganische Basen erfolgen.

Die Umsetzung kann bei Temperaturen zwischen 0 und 150°C, bevorzugt zwischen 40 und 100°C, besonders bevorzugt zwischen 50 und 80°C, erfolgen.

Während der Aufarbeitung der Rohprodukte können die wasserhaltigen Lösungsmittel im Vakuum und bei erhöhter Temperatur entfernt werden. Es können dem Fachmann bekannte wasserschleppende Substanzen (Azeotropbildner) zugesetzt und verwendet werden, um neben dem Lösungsmittel auch Wasser im Vakuum bei erhöhter Temperatur abzutrennen. Das im Rohprodukt enthaltende Wasser kann im Vakuum bei erhöhter Temperatur aus dem Rohprodukt oder dem Endprodukt entfernt werden. Für die Abtrennung von Lösungsmittel, Azeotropbildner und Wasser können dem Fachmann bekannte Hilfsmittel und Vorrichtungen verwendet werden.

Bevorzugt können Vertikalrohrverdampfer, Horizontalrohrverdampfer, Schrägrohrverdampfer, Fallfilmverdampfer, Plattenverdampfer, Blasrohrverdampfer, Rotorverdampfer, Zentrifugalverdampfer, Schneckenverdampfer, Dünnschichtverdampfer und Dünnfilmstripper verwendet werden.

Die Umsetzung kann in korrosionsbeständigen oder korrosionsanfälligen Reaktionsgefäßen oder Autoklaven erfolgen.

Die Umsetzung kann bevorzugt in korrosionsbeständigen Reaktionsgefäßen oder Autoklaven, beispielsweise aus Glas, Teflon, emailliertem bzw. beschichteten Stahl, Hastelloy oder Tantal, erfolgen.

Die Aufarbeitung der Rohproduktsuspension kann wie in DE 10 2005 052 233.5 beschrieben erfolgen.

Die Reaktion zur Herstellung von Organosilanen der allgemeinen Formel I kann in einem offenen oder einem geschlossenen Gefäß und gegebenenfalls unter Schutzgas durchgeführt werden.

Die Reaktion zur Herstellung von Organosilanen der allgemeinen Formel I kann bevorzugt unter erhöhtem Druck (> 0,5 bar Überdruck) durchgeführt werden. Der erhöhte Druck kann zwischen 20 und 0,5 bar, bevorzugt 15 und 0,5 bar, besonders bevorzugt 10 bis 0,5 bar, ganz besonders bevorzugt 5 bis 0,5 bar, Überdruck betragen.

Die Reaktion zur Herstellung von Organosilanen der allgemeinen Formel I kann bevorzugt unter Luftabschluß durchgeführt werden.

Die weiteren Nebenbestandteile von wasserhaltigen Alkalihydrogensulfiden können gegenüber den verwendeten Ausgangsstoffen und/oder den entstandenen Produkten bei der Herstellung von Verbindungen der allgemeinen Formel I inert oder reaktiv sein.

Die Rohproduktausbeute des erfindungsgemäßen Verfahrens kann größer als 90%, bevorzugt größer als 92%, besonders bevorzugt größer als 95%, ganz besonders bevorzugt größer als 97%, bezogen auf die theoretische Ausbeute bezüglich der eingesetzten Menge an (Halogenorganyl) alkoxysilan, sein.

Die Rohproduktausbeute kann die gravimetrisch bestimmte Summe aller isolierten flüssigen Verbindungen, nachdem Lösungsmittel und Feststoffe entfernt sind, sein.

Der Schwefel kann in Form von Schwefelpulver, Schwefelgranulat oder in flüssiger Form zugegeben werden.

Das erfindungsgemäße Verfahren hat den Vorteil, dass allein durch die erfindungsgemäße Reduzierung von Alkalihydroxiden in den Schwefelungsreagentien gleichmäßige Momomergehalte und damit zuverlässige Produktqualitäten erhalten werden.

Das erfindungsgemäße Verfahren hat den Vorteil, daß leicht dosierbare, handelsübliche Feststoffe, beispielsweise wasserhaltiges Natriumhydrogensulfid oder Natriumsulfid, als Schwefelreagenzien verwendet werden.

Das erfindungsgemäße Verfahren hat desweiteren den Vorteil, dass handelsübliche, gebräuchliche, wasserhaltige Schwefelungsrohstoffe eingesetzt werden können. Diese wasserhaltigen, nicht speziell aufbereiteten Rohstoffe sind, gegenüber den aufwändig getrockneten (z.B. auf <3 Gew.-% getrockneten) Alkalihydrogensulfiden, vorteilhaft.

Ein weiterer Vorteil des erfindungsgemäßen Verfahrens gegenüber bekannten Verfahren sind die hohen Umsätze bei kurzen Batchzeiten und bei technisch einfach realisierbaren Temperaturen.

Ein weiterer Vorteil des erfindungsgemäßen Verfahrens sind die hohen Rohproduktausbeuten an flüssigen, nicht zu Polysiloxanen kondensierten Produkten. Das erfindungsgemäße Verfahren zeigt hohe Rohausbeuten an flüssigen Produkten.

Ein weiterer Vorteil des erfindungsgemäßen Verfahrens sind die hohen durch $^{29}$Si-NMR-Analyse nachweisbaren Monomergehalte der Produkte.

Ein weiterer Vorteil des erfindungsgemäßen Verfahrens besteht darin, dass das verwendete Lösungsmittel mehr als 7,5 Gew.-% Wasser enthält und dadurch ein Recycling des verwendeten Lösungsmittels technisch und wirtschaftlich einfacher und attraktiver möglich ist. Aus technischer Sicht sind zu einer Trennung von Lösungsmittel und Wasser weniger aufwendige Trennoperationen und -apparate notwendig. Zum Beispiel sind bei einer destillativen Trennung von Lösungsmittel und Wasser weniger aufwendige Kolonnen und weniger Energieaufwand notwendig.

Beispiele:

Bei der Herstellung von Organosilanen wird wie in den Beispielen und Vergleichsbeispielen angegeben, NaOH-freies bzw. NaOH haltiges $Na_2S$ der Firma Tessenderlo oder ICS Wolfen mit 30 bis 40 Gew.-% Wasser, verwendet.

Analytik:

GC- Analytik für Substanzen der Formel $[(EtO)_3Si- CH_2- CH_2- CH_2- ]_2- S_m$:

Die gaschromatografischen Untersuchungen werden durchgeführt, wie in ASTM Method "Standard Test Method for Silanes Used in Rubber Formulations (Bis- (triethoxysilylpropyl) sulfanes) : Characterization by Gas Chromatography (GC) , D 6843- 02" beschrieben.

Man erhält durch GC (mit internem Standard) die in den Substanzgemischen enthaltenen Mengen an $(EtO)_3Si- CH_2- CH_2- CH_2- Cl$, $(EtO)_3Si- CH_2- CH_2- CH_2- SH$ und $[(EtO)_3Si- CH_2- CH_2- CH_2]_2S$.

HPLC- Analytik für Substanzen der Formel $[(EtO)_3Si- CH_2- CH_2- CH_2- ]_2- S_m$:

Die HPLC- Untersuchungen werden durchgeführt, wie in ASTM Method "Standard Test Method for Silanes Used in Rubber Formulations (Bis- (triethoxysilylpropyl) sulfanes) : Characterization by High Performance Liquid Chromatography (HPLC) , D 6844- 02" beschrieben.

Falls Mischungen der Organosilane der Formel I Verbindungen mit $S_1$ enthalten, dann wird die mittlere Schwefelkettenlänge unter Berücksichtigung der ermittelten Molekulargewichte und Kettenverteilung korrigiert.

$^1$H-NMR :

Die $^1$H- Spektren werden an einem Bruker Avance 500- NMR- Spektrometer mit einer Messfrequenz für H von

500, 13 MHz aufgenommen. Die Spektren werden intern gegen Tetramethylsilan (TMS = 0 ppm) referenziert.

$^{29}$ Si-NMR:

Die Si-Spektren werden an einem Bruker Avance 500-NMR-Spektrometer mit einer Messfrequenz für Si von 99,35 MHz (H-NMR 500,13 MHz) aufgenommen. Die Spektren werden intern gegen Tetramethylsilan (TMS = 0 ppm) referenziert.

| Si-29-NMR-Daten: | |
|---|---|
| ppm | Zuordnung |
| -45 bis -47 | R-**Si**(OR')3 |
| -53 bis -55 | R-**Si**(OR')2-O-Si |
| -62 bis -66 | Si-O-**Si**(R)(OR')-O-Si |

Die korrigierten Integrale im $^{29}$Si- NMR sind direkt proportional zu den Gewichtsanteilen der Monomeren, Dimeren und Trimeren in der Probe, wobei bei den Trimeren davon ausgegangen wird, dass es sich um ringförmige Trimere mit (- O- (EtO) Si- O- )$_3$ Gerüst handelt.

Bestimmungsmethode von $Na_2S$, NaOH und NaSH in Mischungen von Schwefelungsreagentien (Einsatzstoffen):

Lösung A

100g Probe wird auf 0,1 g genau in einen 500 ml Messkolben eingewogen und mit 200 ml Reinstwasser ($CO_2$ frei) gelöst. Nach dem Auflösen der Probe wird das Magnetrührstäbchen entfernt, der Messkolben bis zur Marke mit Reinstwasser aufgefüllt und geschüttelt.

Lösung B

Mit einer Vollpipette wird ein aliquoter Teil von 100 ml der zu untersuchenden Lösung A in einen weiteren 500 ml Messkolben pipettiert. Mit dem Meßzylinder werden 50 ml Glycerin zugegeben, mit Reinstwasser bis zur Marke aufgefüllt und gut geschüttelt.

Durchführung der Prüfung

Mit Hilfe eines Dosimates wird 80 ml Iod-Lösung und 25 ml HCl-Lösung in einen 250 ml Erlenmeyerkolben dosiert. Aus der Lösung B wird 10 ml Probelösung mit einer Pipette entnommen und unter leichtem Rühren zugegeben (die Pipettenspitze sollte in der Lösung eingetaucht sein). Die Wände des Kolbens mit Reinstwasser abspülen und nach Zugabe von ca. 5 ml Stärkelösung mit Thiosulfatlösung zum Farbumschlag von violett nach farblos titriert (kurz vor Erreichen des Endpunkts sehr langsam).

Anschließend zu der gleichen Lösung (farblos aber trübe) einige Tropfen Phenolphtalein zugeben und bis zum Farbumschlag von farblos nach violett mit NaOH-Lösung titriert.

Wenn weniger als 25 ml NaOH-Lösung verbraucht wird, ist freies NaOH in der Probe vorhanden (Berechnung 2), ist der Verbrauch größer als 25 ml, enthält die Probe Natriumhydrogensulfid (Berechnung 3).

Der Massenanteil w des $Na_2S$ im technischen $Na_2S$ errechnet sich nach:

$$Na_2S - Gehalt\ [Gew. - \%] = \{(V_I \times F_I) - (V_T \times F_T)\} \times 0{,}39 \times A$$

wobei:

$V_I$ 80 ml $c(I_2)$ = 0,05mol/l
$F_I$ Titer der Iodidlösung
$V_T$ Verbrauch an $c(Na_2S_2O_3)$ = 0,1 mol/l
$F_T$ Titer der Thiosulfatlösung

A Verdünnungsfaktor = 2,5

Der Massenanteil w des NaOH im technischen $Na_2S$ errechnet sich nach:

(wenn NaOH < HCl)

$$\text{NaOH} - \text{Gehalt [Gew.} - \%] = \{(V_S \times F_S) - (V_{Na} \times F_{Na})\} \times 0{,}3999 \times A$$

$V_S$ 25 ml c(HCl) = 0,1 mol/l
$F_S$ Titer der Salzsäurelösung
$V_{Na}$ Verbrauch an c(NaOH) = 0,1 mol/l
$F_{Na}$ Titer der Natronlauge
A Verdünnungsfaktor = 2,5

Der Massenanteil w des NaHS im technischen $Na_2S$ errechnet sich nach:

(wenn NaOH > HCl)

$$\text{NaHS} - \text{Gehalt [Gew.} - \%] = \{(V_{Na} \times F_{Na}) - (V_S \times F_S)\} \times 0{,}56 \times A$$

$V_{Na}$ Verbrauch an c(NaOH) = 0,1 mol/l
$F_{Na}$ Faktor der Natronlauge
$V_S$ 25 ml c(HCl) = 0,1 mol/l
Fs Faktor der Salzsäurelösung
A Verdünnungsfaktor = 2,5

Vergleichsbeispiel 1

In einem drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Solvay, alkalihydroxidfrei) , 80, 4 kg $Na_2S$- Hydrat (Fa. ICS Wolfen, 60 %ig mit 0, 9 Gew.- % NaOH und 0 Gew.- % NaSH) und 56, 8 kg Mahlschwefel (Fa. Solvay, 200 Mesh; alkalihydroxidfrei) vorgelegt und mit einem Rührwerk gut durchmischt. Der Alkalihydroxidgehalt der Einsatzstoffe beträgt 0, 44 Gew.- % (Berechnung: 0, 72 kg NaOH/ (24 kg + 80, 4 kg + 56, 8 kg) = 0, 72 kg/ 161, 2 kg = 0, 44 Gew.- %) . Der Reaktorinhalt wird für 60 min auf 50°C erwärmt. Es werden 312 kg 3- Chlorpropyl (triethoxysilan) im Abstand von 30 min in zwei Portionen zu der Reaktionsmischung dosiert. Es bilden sich innerhalb von 180 min farblose Partikel in der Reaktionslösung, gleichzeitig steigt die Viskosität der Suspension an. Die Suspension wird über eine Zentrifuge in feste und flüssige Bestandteile getrennt. Aus der flüssigen Phase wird das Lösungsmittel durch Destillation im Vakuum entfernt. Eine NMR- analytische Untersuchung des verbliebenen, flüssigen Produktes ergibt als siliziumhaltige Bestandteile überwiegend hydrolisierte Triethoxysilanspezies. Die hydrolisierten Triethoxysilanspezies liegen überwiegend als oligomere und polymere Siloxane vor. Der Monomergehalt der erhaltenen Produkte beträgt, bezogen auf die Einsatzmenge an 3- Chlorpropyl (triethoxysilan) , <10 Gew.- %. Die Ausbeute der erhaltenen Produkte beträgt, bezogen auf die Einsatzmenge an 3- Chlorpropyl (triethoxysilan) , <10 Ges.- %.

Vergleichsbeispiel 2

In einem drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Solvay, alkalihydroxidfrei) , 40, 2 kg $Na_2S$- Hydrat (Fa. ICS Wolfen, 60 %ig mit 0, 9 Gew.- % NaOH und 0 Gew.- % NaSH) und 56, 8 kg Mahlschwefel (Fa. Solvay, 200 Mesh; alkalihydroxidfrei) vorgelegt und mit einem Rührwerk gut durchmischt. Der Reaktorinhalt wird für 60 min auf 50°C erwärmt. Es werden 312 kg 3- Chlorpropyl (triethoxysilan) zu der Reaktionsmischung dosiert. Nachdem die Temperatur auf 54°C gefallen ist, werden im Abstand von 30 min zwei Portionen zu je 20, 1 kg $Na_2S$- Hydrat (Fa. ICS Wolfen, 60 %ig mit 0, 9 Gew.- % NaOH und 0 Gew.- % NaSH) zu der Suspension gegeben. Der Alkalihydroxidgehalt der Einsatzstoffe beträgt somit 0, 44 Gew.- % (Berechnung: 0, 72 kg NaOH/ (24 kg + 80, 4 kg + 56, 8 kg) = 0, 72 kg/ 161, 2 kg = 0, 44 Gew.- %) . Die Reaktionslösung mit den Einsatzstoffen wird für 120 min auf 55- 60°C erwärmt. Die erhaltene Suspension wird auf 25- 30°C abgekühlt und über eine Zentrifuge in feste und flüssige Bestandteile getrennt.

Aus der flüssigen Phase wird das Lösungsmittel durch Destillation im Vakuum entfernt. Es werden 315 kg flüssiges Produkt isoliert. Das Produkt enthält laut GC- Analyse 6 Gew.- % 3- Chlorpropyl (triethoxysilan) . Die mit HPLC ermittelte Kettenlänge m beträgt 3, 78. Eine $^{29}$Si- NMR- analytische Untersuchung des Produktes ergibt einen Monomergehalt von 81 Gew.- %. Die Ausbeute des erhaltenen Produktes beträgt 91%.

Beispiel 1

In einem drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Solvay, alkalihydroxidfrei) , 20, 1 kg $Na_2S$- Hydrat (Fa. ICS Wolfen, 60 %ig mit 0, 9 Gew.- % NaOH und 0 Gew.- % NaSH) , 20, 1 kg $Na_2S$- Hydrat (Fa. ICS Wolfen, 62 %ig mit 0 Gew.- % NaOH und 1, 35 Gew.- % NaSH) und 56, 8 kg Mahlschwefel (Fa. Solvay, 200 Mesh; alkalihydroxidfrei) vorgelegt und mit einem Rührwerk gut durchmischt. Der Reaktorinhalt wird für 60 min auf 50°C erwärmt. Es werden 310 kg 3- Chlorpropyl (triethoxysilan) zu der Reaktionsmischung dosiert und die Reaktionslösung im Temperaturbereich 50- 60°C stabilisiert. Nach 30 min werden 10, 05 kg $Na_2S$- Hydrat (Fa. ICS Wolfen, 60 %ig mit 0, 9 Gew.- % NaOH und 0 Gew.- % NaSH) und 10, 05 kg $Na_2S$- Hydrat (Fa. ICS Wolfen, 62 %ig mit 0 Gew.- % NaOH und 1, 35 Gew.- % NaSH) zu der Suspension dosiert. Nach weiteren 30 min werden nocheinmal 10, 05 kg $Na_2S$- Hydrat (Fa. ICS Wolfen, 60 %ig mit 0, 9 Gew.- % NaOH und 0 Gew.- % NaSH) und 10, 05 kg $Na_2S$- Hydrat (Fa. ICS Wolfen, 62 %ig mit 0 Gew.- % NaOH und 1, 35 Gew.- % NaSH) zu der Suspension dosiert. Der Alkalihydroxidgehalt der Einsatzstoffe beträgt somit 0, 22 Gew.- % (Berechnung: 0, 36 kg NaOH/ (24 kg + 80, 4 kg + 56, 8 8 kg) = 0, 36 kg/ 161, 2 kg = 0, 22 Gew.- %) . Die Reaktionslösung mit den Einsatzstoffen wird für 120 min auf 55- 65°C erwärmt. Die erhaltene Suspension wird auf 25- 30°C abgekühlt und über eine Zentrifuge in feste und flüssige Bestandteile getrennt. Aus der flüssigen Phase wird das Lösungsmittel durch Destillation im Vakuum entfernt. Es werden 319 kg flüssiges Produkt isoliert. Das Produkt enthält laut GC- Analyse 3, 1 Gew.- % 3- Chlorpropyl (triethoxysilan) . Die mit HPLC ermittelte Kettenlänge m beträgt 3, 78. Eine $^{29}$Si- NMR- analytische Untersuchung des Produktes ergibt einen Monomergehalt von 93, 5 Gew.- %. Die Ausbeute des erhaltenen Produktes beträgt 93%.

Beispiel 2

In einem drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Solvay, alkalihydroxidfrei) , 20, 1 kg $Na_2S$- Hydrat (Fa. FMC Foret SA, 61 %ig mit 0 Gew.- % NaOH und 1, 2 Gew.- % NaSH) und 56, 8 kg Granulatschwefel (Fa. Rotoform, alkalihydroxidfrei) vorgelegt und mit einem Rührwerk gut durchmischt. Der Reaktorinhalt wird für 30 min auf 50°C erwärmt. Es werden 303 kg 3- Chlorpropyl (triethoxysilan) zu der Reaktionsmischung dosiert und die Reaktionslösung im Temperaturbereich 50- 60°C stabilisiert. Nach jeweils 30 min werden in drei Portionen je 20, 1 kg $Na_2S$- Hydrat (Fa. FMC Foret SA, 61 %ig mit 0 Gew.- % NaOH und 1, 2 Gew.- % NaSH) zu der Suspension dosiert. Nach der letzten $Na_2S$- Dosierung werden 50 g NaOH (Fa. Aldrich) zu der Reaktionsmischung dosiert. Der Alkalihydroxidgehalt der Einsatzstoffe beträgt somit 0, 03 Gew.- % (Berechnung: 0, 05 kg NaOH/ (24 kg + 80, 4 kg + 56, 8 kg) = 0, 05 kg/ 161, 2 kg = 0, 03 Gew.- %) . Die Reaktionslösung mit den Einsatzstoffen wird für 120 min auf 55- 65°C erwärmt. Die erhaltene Suspension wird auf 25- 30°C abgekühlt und über eine Zentrifuge in feste und flüssige Bestandteile getrennt. Aus der flüssigen Phase wird das Lösungsmittel durch Destillation entfernt. Es werden 323 kg flüssiges Produkt isoliert. Das Produkt enthält laut GC- Analyse 2, 0 Gew.- % 3- Chlorpropyl (triethoxysilan) . Die mit HPLC ermittelte Kettenlänge m beträgt 3, 73. Eine $^{29}$Si- NMR- analytische Untersuchung des Produktes ergibt einen Monomergehalt von 97 Gew.- %. Die Ausbeute des erhaltenen Produktes beträgt 96, 6%.

Beispiel 3

In einen drucklosen, stickstoffüberlagerten Reaktor mit angeschlossenem alkalischen Wäscher werden 137, 0 kg wasserhaltiges Ethanol (enthält 10, 0 Gew.- % $H_2O$) , 18 kg $NaHCO_3$ (Fa. Merck, alkalihydroxidfrei) , 56, 8 kg Granulatschwefel (Fa. RAG Additive GmbH, alkalihydroxidfrei) und 300 kg 3- Chlorpropyl (triethoxsilan) dosiert und die Suspension für 20 min auf 48- 52°C erwärmt. Es werden anschließend im Abstand von je 30 min fünfmal je 16, 1 kg $Na_2S$- Hydrat (Fa. Tessenderlo, 60 %ig mit 0 Gew.- % NaOH und 1, 0 Gew.- % NaSH) zu der Suspension dosiert. Nach der vierten $Na_2S$- Dosierung werden 20 g NaOH (Fa. Aldrich) zu der Reaktionsmischung dosiert. Der Alkalihydroxidgehalt der Einsatzstoffe beträgt somit 0, 013 Gew.- % (Berechnung: 0, 02 kg NaOH/ (18 kg + 80, 5 kg + 56, 8 kg) = 0, 02 kg/ 155, 3 kg = 0, 013 Gew.- %) . Die Reaktionslösung mit den Einsatzstoffen wird für 120 min auf 55- 65°C erwärmt. Von der erhaltenen Suspension wird das Lösungsmittel durch Destillation im Vakuum entfernt. Die verbleibende Suspension wird mit einer Zentrifuge in feste und flüssige Bestandteile getrennt. Es werden 303, 5 kg flüssiges Produkt isoliert. Das Produkt enthält laut GC- Analyse 1, 7 Gew.- % 3- Chlorpropyl (triethoxysilan) . Die mit HPLC ermittelte Kettenlänge m beträgt 3, 76. Eine $^{29}$Si- NMR- analytische Untersuchung des Produktes ergibt einen Monomergehalt von 97, 6 Gew.-

%. Die Ausbeute des erhaltenen Produktes beträgt 92%.

Beispiel 4

In einen drucklosen Reaktor mit angeschlossenem alkalischen Wäscher werden 140, 0 kg wasserhaltiges Ethanol (enthält 15, 0 Ges.- % $H_2O$) , 18 kg $NaHCO_3$ (Fa. Merck, alkalihydroxidfrei) , 56, 8 kg Granulatschwefel (Fa. RAG Additive GmbH, alkalihydroxidfrei) und 300 kg 3- Chlorpropyl (triethoxysilan) dosiert und die Suspension für 20 min auf 48- 52°C erwärmt. Es werden anschließend im Abstand von 30 min fünfmal je 16, 1 kg $Na_2S$- Hydrat (Fa. Tessenderlo, 60 %ig mit 0 Gew.- % NaOH und 1, 0 Gew.- % NaSH) zu der Suspension dosiert. Der Alkalihydroxidgehalt der Einsatzstoffe beträgt somit 0, 0 Gew.- %. Die Reaktionslösung mit den Einsatzstoffen wird für 120 min auf 55- 65°C erwärmt. Von der erhaltenen Suspension wird das Lösungsmittel durch Destillation im Vakuum entfernt. Die verbleibende Suspension wird mit einer Zentrifuge in feste und flüssige Bestandteile getrennt. Es werden 322 kg flüssiges Produkt isoliert. Das Produkt enthält laut GC- Analyse 1, 3 Gew.- % 3- Chlorpropyl (triethoxysilan) . Die mit HPLC ermittelte Kettenlänge m beträgt 3, 76. Eine $^{29}Si$- NMR- analytische Untersuchung des Produktes ergibt einen Monomergehalt von 97, 8 Gew.- %. Die Ausbeute des erhaltenen Produktes beträgt 97%.

Beispiel 5

In einen drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Merck, alkalihydroxidfrei) , 56, 8 kg Granulatschwefel (Fa. RAG Additive GmbH, alkalihydroxidfrei) und 309 kg 3- Chlorpropyl (triethoxysilan) dosiert und die Suspension für 20 min auf 48- 52°C erwärmt. Es werden anschließend im Abstand von 30 min fünfmal je 16, 1 kg $Na_2S$- Hydrat (Fa. Tessenderlo, 60 %ig mit 0 Gew.- % NaOH und 1, 0 Gew.- % NaSH) zu der Suspension dosiert. Mit jeder der $Na_2S$- Dosierungen werden je 20 g NaOH zudosiert. Der Alkalihydroxidgehalt der Einsatzstoffe beträgt somit 0, 062 Gew.- % (Berechnung: 0, 1 kg NaOH/ (24 kg + 80, 5 kg + 56, 8 kg) = 0, 1 kg/ 161, 3 kg = 0, 062 Gew.- %) . Die Reaktionslösung mit den Einsatzstoffen wird für 120 min auf 55- 65°C erwärmt. Die erhaltene Suspension wird auf 25- 30°C abgekühlt und über eine Zentrifuge in feste und flüssige Bestandteile getrennt. Aus der flüssigen Phase wird das Lösungsmittel durch Destillation im Vakuum entfernt. Es werden 320 kg flüssiges Produkt isoliert. Das Produkt enthält laut GC- Analyse 3, 5 Gew.- % 3- Chlorpropyl (triethoxysilan) . Die mit HPLC ermittelte Kettenlänge m beträgt 3, 76. Eine $^{29}Si$- NMR- analytische Untersuchung des Produktes ergibt einen Monomergehalt von 97, 2 Gew.- %. Die Ausbeute des erhaltenen Produktes beträgt 94%.

Beispiel 6

In einen drucklosen, stickstoffüberlagerten Reaktor mit angeschlossenem alkalischen Wäscher werden 140, 0 kg wasserhaltiges Ethanol (enthält 20, 0 Gew.- % $H_2O$) , 24 kg $NaHCO_3$ (Fa. Merck, alkalihydroxidfrei) , 56, 8 kg Granulatschwefel (Fa. CS Additive GmbH, alkalihydroxidfrei) und 303 kg 3- Chlorpropyl (triethoxsilan) dosiert und die Suspension für 20 min auf 48- 52°C erwärmt. Es werden anschließend im Abstand von je 30 min fünfmal je 16, 1 kg $Na_2S$- Hydrat (Fa. Tessenderlo, 60 %ig mit 0 Gew.- % NaOH und 1, 0 Gew.- % NaSH) zu der Suspension dosiert. Der Alkalihydroxidgehalt der Einsatzstoffe beträgt somit 0, 0 Gew.- %. Die Reaktionslösung mit den Einsatzstoffen wird für 120 min auf 55- 65°C erwärmt. Die erhaltene Suspension wird mit einer Zentrifuge in feste und flüssige Bestandteile getrennt. Die flüssigen Bestandteile bilden eine obere, rötliche, stark wasserhaltige Phase und eine untere, gelbliche silanhaltige Phase. Die beiden Phasen werden separiert und die silanhaltige Phase im Vakuum durch Destillation vom Lösungsmittel befreit. Es werden 306 kg flüssiges Produkt isoliert. Das Produkt enthält laut GC- Analyse 3, 2 Gew.- % 3- Chlorpropyl (triethoxysilan) . Die mit HPLC ermittelte Kettenlänge m beträgt 3, 79. Eine $^{29}Si$- NMR- analytische Untersuchung des Produktes ergibt einen Monomergehalt von 95, 1 Gew.- %. Die Ausbeute des erhaltenen Produktes beträgt 92%.

## Patentansprüche

1. Verfahren zur Herstellung von Organosilanen der allgemeinen Formel I,

$$[R\ (R)\ (R'O)Si\text{-}R''\text{-}]_2S_m \qquad I$$

wobei
R gleich oder verschieden und eine $C_1$-$C_8$-Alkyl-, $C_1$-$C_8$ -Alkenyl-, $C_1$-$C_8$ -Aryl-, $C_1$-$C_8$ -Aralkylgruppe oder eine OR' Gruppe ist,

R' gleich oder verschieden und eine $C_1$-$C_{22}$-verzweigte oder unverzweigte einbindige Alkyl-oder Alkenyl-Gruppe, eine Arylgruppe, eine Aralkylgruppe, ein Wasserstoff,
eine Alkylethergruppe O-($CR^{III}_2$)-O-Alk oder O-($CR^{III}_2$)$_y$-O-Alk oder eine Alkylpolyethergruppe O-($CR^{III}II_2O$)$_y$-Alk oder O-($CR^{III}_2$-$CR^{III}_2$-O)$_y$-Alk, mit y = 2-20, $R^{III}$ unabhängig voneinander H oder eine Alkylgruppe ist und
Alk eine verzweigte oder unverzweigte, gesättigte oder ungesättigte, aliphatische, aromatische oder gemischt aliphatische /aromatische einbindige $C_1$-$C_{22}$ - Kohlenwasserstoffgruppe ist, ist,
R" eine verzweigte oder unverzweigte, gesättigte oder ungesättigte, aliphatische, aromatische oder gemischt aliphatische /aromatische zweibindige $C_1$-$C_{30}$ - Kohlenwasserstoffgruppe, die gegebenenfalls mit F-, Cl-, Br-, I-, HS-, $NH_2$-, oder NHR' substituiert ist, ist,
m eine mittlere Schwefelkettenlänge von 1,5 bis 4,5 ist,
durch Umsetzung von (Halogenorganyl)alkoxysilan der Formel II,

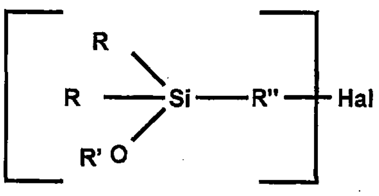

II

wobei R, R' und R" die oben angegebenen Bedeutungen haben und Hal Chlor, Brom, Fluor oder Iod ist,
mit einem Schwefelungsreagenz, ausgewählt aus der Gruppe Alkalihydrogensulfid, Metallsulfid $Me_2S$, Metallpolysulfid $Me_2Sg$ und beliebige Kombinationen hiervon, mit Me= Alkalimetall, $NH_4$ oder (Erdalkalimetall)$_{1/2}$, und g=1, 5-8, 0,
und gegebenenfalls zusätzlich mit Schwefel und/oder mit $H_2S$ in einem Lösungsmittel, wobei das Lösungsmittel ein Alkohol oder eine Mischung von Alkoholen ist,
**dadurch gekennzeichnet, dass** der Alkalihydroxidgehalt aller Einsatzstoffe
< 0,44 Gew.-% ist und ein Additiv vor, während oder nach der Reaktion zugegeben wird, welches in der Lage ist, im pH Bereich zwischen 5 und 8 ein Proton reversibel oder irreversibel an Alkalihydrogensulfid oder Alkalisulfid abzugeben.

2. Verfahren zur Herstellung von Organosilanen nach Anspruch 1, **dadurch gekennzeichnet, daß** man vor, während oder nach der Reaktion Additive zugibt.

3. Verfahren zur Herstellung von Organosilanen nach Anspruch 2, **dadurch gekennzeichnet, daß** die Additive nichtalkoholische Lösungsmittel, polare, protische, aprotische, basische oder saure Additive sind.

4. Verfahren zur Herstellung von Organosilanen nach Anspruch 1, **dadurch gekennzeichnet, daß** man als wasserhaltiges Schwefelungsreagenz $Me_2S$ und Schwefel einsetzt.

5. Verfahren zur Herstellung von Organosilanen nach Anspruch 1, **dadurch gekennzeichnet, daß** man als wasserhaltige Schwefelungsreagenzien Alkalihydrogensulfide, $Me_2S$, $Me_2S_g$ und beliebige Kombinationen hiervon einsetzt und die Reaktion unter Luftabschluß durchführt.

6. Verfahren zur Herstellung von Organosilanen nach Anspruch 1, **dadurch gekennzeichnet, daß** als Additiv $NaHCO_3$ eingesetzt wird.

## Claims

1. Process for preparing organosilanes of the general formula I

$$[R\ (R)\ (R'O)Si\text{-}R''\text{-}]_2S_m \qquad I$$

where
R is the same or different and is a $C_1$-$C_8$-alkyl, $C_1$-$C_8$-alkenyl, $C_1$-$C_8$-aryl, $C_1$-$C_8$-aralkyl group, or an OR' group,
R' is the same or different and is a $C_1$-$C_{22}$ branched or unbranched monovalent alkyl or alkenyl group, an aryl group,

an aralkyl group, a hydrogen,
an alkyl ether group O-($CR^{III}_2$)-O-Alk or O-($CR^{III}_2$)$_y$-O-Alk or an alkyl polyether group O-($CR^{III}_2O$)$_y$-Alk or O-($CR^{III}_2$-$CR^{III}_2$-O)$_y$-Alk, where y = 2-20, $R^{III}$ is independently H or an alkyl group and
Alk is a branched or unbranched, saturated or unsaturated, aliphatic, aromatic or mixed aliphatic/aromatic monovalent $C_1$-$C_{22}$ hydrocarbon group,
R" is a branched or unbranched, saturated or unsaturated, aliphatic, aromatic or mixed aliphatic/aromatic divalent $C_1$-$C_{30}$ hydrocarbon group which is optionally substituted by F, Cl, Br, I, HS, $NH_2$ or NHR',
m is a mean sulfur chain length of from 1.5 to 4.5,
by reacting (haloorganyl)alkoxysilane of the formula II

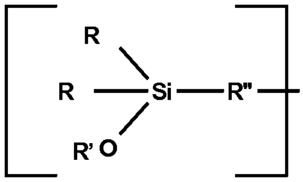

II

where R, R' and R" are each as defined above and Hal is chlorine, bromine, fluorine or iodine, with a sulfurizing reagent selected from the group of alkali metal hydrogensulfide, metal sulfide $Me_2S$, metal polysulfide $Me_2Sg$ and any desired combinations thereof, where Me = alkali metal, $NH_4$ or (alkaline earth metal)$_{1/2}$, and g=1.5-8.0,
and optionally additionally with sulfur and/or with $H_2S$ in a solvent, the solvent being an alcohol or a mixture of alcohols, **characterized in that** the alkali metal hydroxide content of all feedstocks is < 0.44% by weight and, before, during or after the reaction, an additive is added which is capable of reversibly or irreversibly releasing a proton to alkali metal hydrogensulfide or alkali metal sulfide in the pH range between 5 and 8.

2. Process for preparing organosilanes according to Claim 1, **characterized in that** additives are added before, during or after the reaction.

3. Process for preparing organosilanes according to Claim 2, **characterized in that** the additives are nonalcoholic solvents, or polar, protic, aprotic, basic or acidic additives.

4. Process for preparing organosilanes according to Claim 1, **characterized in that** the hydrous sulfurizing reagents used are $Me_2S$ and sulfur.

5. Process for preparing organosilanes according to Claim 1, **characterized in that** the hydrous sulfurizing reagents used are alkali metal hydrogensulfides, $Me_2S$, $Me_2Sg$ and any desired combinations thereof, and the reaction is carried out with exclusion of air.

6. Process for preparing organosilanes according to Claim 1, **characterized in that** the additive used is $NaHCO_3$.

## Revendications

1. Procédé pour la préparation d'organosilanes de formule générale I,

$$[R(R)(R'O)Si\text{-}R''\text{-}]_2S_m \qquad I$$

dans laquelle
R peut être le même ou différent et est un groupe alkyle en $C_1$-$C_8$, alcényle en $C_1$-$C_8$, aryle en $C_1$-$C_8$, aralkyle en $C_1$-$C_8$ ou un groupe OR',
R' peut être le même ou différent et est un groupe alkyle ou alcényle en $C_1$-$C_{22}$ à une liaison, ramifié ou non ramifié, un groupe aryle, un groupe aralkyle, un atome d'hydrogène,
un groupe alkyléther O-($CR^{III}_2$)-O-Alk ou O-($CR^{III}_2$)$_y$-O-Alk ou un groupe alkylpolyéther O-($CR^{III}_2O$)$_y$-Alk ou O-($CR^{III}_2$-$CR^{III}_2$-O)$_y$-Alk, où y = 2-20, $R^{III}$, chaque fois indépendamment, est H ou un groupe alkyle et
Alk est un groupe hydrocarboné en $C_1$-$C_{22}$ à une liaison, ramifié ou non ramifié, saturé ou insaturé, aliphatique,

aromatique ou aliphatique/aromatique mixte,
R" est un groupe hydrocarboné en $C_1$-$C_{30}$ à deux liaisons, ramifié ou non ramifié, saturé ou insaturé, aliphatique, aromatique ou aliphatique/aromatique mixte, qui est éventuellement substitué par F-, Cl-, Br-, I-, HS-, $NH_2$- ou NHR',
m est une longueur moyenne de chaîne soufrée de 1,5 à 4,5,
par mise en réaction d'un (halogéno-organyl)alcoxyilane de formule II,

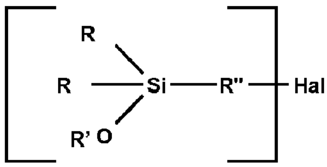

II

dans laquelle R, R' et R" ont les significations indiquées plus haut et Hal est le chlore, le brome, le fluor ou l'iode, avec un réactif de sulfuration, choisi dans le groupe constitué par un hydrogénosulfure de métal alcalin, un sulfure métallique $Me_2S$, un polysulfure métallique $Me_2Sg$ et des associations quelconques de ceux-ci, où Me = métal alcalin, $NH_4$ ou (métal alcalino-terreux)$_{1/2}$, et g = 1,5-8,0,
et éventuellement en outre avec du soufre et/ou avec $H_2S$ dans un solvant, le solvant étant un alcool ou un mélange d'alcools,
**caractérisé en ce que** la teneur en hydroxydes de métaux alcalins de tous les produits de départ est < 0,44 % en poids et avant, pendant ou après la réaction on ajoute un additif qui est apte, dans l'intervalle de pH compris entre 5 et 8, à céder réversiblement ou irréversiblement un proton à l'hydrogénosulfure de métal alcalin ou au sulfure de métal alcalin.

**2.** Procédé pour la préparation d'organosilanes selon la revendication 1, **caractérisé en ce que** qu'avant, pendant ou après la réaction on ajoute des additifs.

**3.** Procédé pour la préparation d'organosilanes selon la revendication 2, **caractérisé en ce que** les additifs sont des solvants non alcooliques, des additifs polaires, protiques, aprotiques, basiques ou acides.

**4.** Procédé pour la préparation d'organosilanes selon la revendication 1, **caractérisé en ce qu'**on utilise comme réactif de sulfuration hydraté $Me_2S$ et le soufre.

**5.** Procédé pour la préparation d'organosilanes selon la revendication 1, caractérisé en qu'on utilise comme réactifs de sulfuration hydratés des hydrogénosulfures de métaux alcalins, $Me_2S$, $Me_2Sg$ et des associations quelconques de ceux-ci, et on effectue la réaction à l'abri de l'air.

**6.** Procédé pour la préparation d'organosilanes selon la revendication 1, **caractérisé en ce qu'**on utilise comme additif $NaHCO_3$.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1130023 A
- WO 2003002577 A1
- WO 2004043969 A
- DE 102005052233